(19) Europäisches Patentamt
European Patent Office
Office européen des brevets

(11) Publication number: **0 197 351**
**B1**

(12) # EUROPEAN PATENT SPECIFICATION

(45) Date of publication of patent specification: **13.09.89**

(51) Int. Cl.$^4$: **C 08 J 5/04,** C 08 K 7/02, C 08 L 69/00

(21) Application number: **86103421.3**

(22) Date of filing: **14.03.86**

(54) **Prepreg compositions for the preparation of polycarbonate continuous-fiber composites.**

(30) Priority: **20.03.85 US 714224**

(43) Date of publication of application:
**15.10.86 Bulletin 86/42**

(45) Publication of the grant of the patent:
**13.09.89 Bulletin 89/37**

(84) Designated Contracting States:
**DE FR GB IT NL**

(56) References cited:
**EP-A-0 162 379**
**EP-A-0 173 382**
**FR-A-1 385 700**
**GB-A-1 570 000**
**US-A-4 393 020**
**RAPRA ABSTRACTS, vol. 11, no. 11, 11th March 1974, abstract no. 21593L, Pergamon Press, Oxford, GB; J.L. KARDOS et al.: "Tailoring the interface in graphite-reinforced polycarbonate", & POLYM. ENGNG. SCI., 13, no. 6, Nov. 1973, p. 455-61**

(73) Proprietor: **GENERAL ELECTRIC COMPANY**
**1 River Road**
**Schenectady New York 12305 (US)**

(72) Inventor: **Evans, Thomas Lane**
**3 Earl Court**
**Clifton Park New York 12065 (US)**
Inventor: **Vallance, Michael Alan**
**511 Union Street**
**Schenectady New York 12305 (US)**

(74) Representative: **Catherine, Alain et al**
**General Electric France Service de Propriété Industrielle 18 Rue Horace Vernet B.P. 76**
**F-92134 Issy-les-Moulineaux Cedex (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 197 351 B1

## Description

This invention relates to prepreg compositions for the preparation of continuous-fiber resinous composites, more particularly, to composites in which the resinous material is a polycarbonate.

Polycarbonates, particularly those derived from 2,2-bis(4-hydroxyphenyl)propane (bisphenol A), are impact-resistant, moisture-resistant and ductile materials in wide use as engineering resins. These properties make them apparently excellent candidates for thermoplastic continuous-fiber, advanced-composite components for use in primary and secondary structures in such applications as high-speed vehicles, machinery and sporting goods. Thermoplastic composites have a number of advantages over the somewhat more well known theremoset composites, such as the capability of being shaped after polymerization is completed.

Nevertheless, polycarbonates have not been in wide use for preparing continuous-fiber composites because of the difficulty in effectivley infusing the polymer into the fiber tows. Polycarbonates are commonly prepared interfacially by the reaction of phosgene with a dihydroxyaromatic compound, or by transesterification of a diaryl carbonate with a dihydroxyaromatic compound In both of these methods, the molecular weight and viscosity of the polymer obtained are so high that there is difficulty in achieving adequate wet-out for effective impregnation of continuous fibers therewith. Solution impregnation methods are inconvenient because of the necessity of removing and recycling solvent, and the temperatures required for melt impregnation are so high that the polycarbonate tends to undergo chemical degration.

A principal object of the present invention, therefore, is to provide compositions suitable for use in the production of continuous-fiber polycarbonate composites.

A further object is to provide compositions which are capable of effectively impregnating continuous fibers at relatively low temperatures.

The present invention is directed to moldable polycarbonate formation catalyst-containing prepreg compositions comprising a filler consisting essentially of continuous fibers and a polymerizable composition comprising a mixture of cyclic oligomers having the formula

(I) 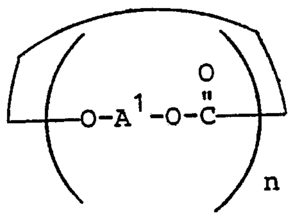

wherein $A^1$ is a divalent aromatic radical and n is from 2 to 30.

The fillers in the prepreg compositions of this invention may comprise any of the continuous fiber materials known in the art. These include carbon, glass, highly oriented polyamide and boron fibers. Carbon fibers are frequently preferred, especially when a particularly stiff composition article is desired. The filler may be in unidirectional form, either as yarns or as random fibers, or may be woven into fabric batts or tapes.

Certain filler materials are treated with a sizing composition compatible with some other resin system, typically an epoxy system. Under these circumstances it may be advantageous to remove the sizing before contacting the filler with the oligomer mixture. Removal may be effected by treating with a suitable solvent; pyrolytically by heating at a temperature up to about 400°C (preferably in an inert atmosphere such as nitrogen, particularly when the filler is an oxidizable material such as carbon); or by other suitable procedures.

The impregnating material is a cyclic polycarbonate oligomer mixture of the type disclosed in US—A—4,644,053 (& EP—A—162 379).

The $A^1$ radicals therein are aromatic radicals illustrated by m-phenylene, p-phenylene, 4,4'-biphenylene and 2,2-bis(4-phenylene)propane and others which correspond to the dihydroxy compounds disclosed by name or formula (generic or specific in US—A—4,217,438. Also included are radicals containing non-hydrocarbon moieties.These may be substituents such as chloro, nitro, alkoxy and the like, and also linking radicals such as thio, sulfoxy, sulfone, ester, amide, ether and carbonyl. Most often, however, all $A^1$ radicals are hydrocarbon radicals.

The $A^1$ radicals preferably have the formula

(II) $$-A^2-Y-A^3 \quad ,$$

wherein each of $A^2$ and $A^3$ is a single-ring divalent aromatic radical and Y is a bridging radical in which one or two atoms separate $A^2$ from $A^3$. The free valence bonds in formula II are usually in the meta or para positions of $A^2$ and $A^3$ in relation to Y. Such $A^1$ values may be considered as being derived from bisphenols of the formula $HO-A^1-Y-A^3-OH$. Frequent reference to bisphenols will be made hereinafter, but it should be understood that $A^1$ values derived from suitable compounds other than bisphenols may be employed as appropriate.

In formula II, the $A^2$ and $A^3$ values may be unsubstituted phenylene or substituted derivatives thereof, illustrative substituents (one or more) being alkyl, alkenyl (e.g., crosslinkable-graftable moieties such as vinyl and allyl), halo (especially chloro and/or bromo), nitro, alkoxy and the like. Unsubstituted phenylene radicals are preferred. Both $A^2$ and $A^3$ are preferably p-phenylene, although both may be o- or m-phenylene or one o- or m-phenylene and the other p-phenylene.

The bridging radical, Y, is one in which one or two atoms, preferably one, separate $A^2$ from $A^3$. It is most often a hydrocarbon radical and particularly a saturated radical such as methylene, cyclohexylmethylene, 2-[2.2.1]-bicycloheptylmethylene, ethylene, 2,2-propylene, 1,1-(2,2-dimethylpropylene), 1,1-cyclohexylene, 1,1-cyclopentadecylene, 1,1-cyclododecylene or 2,2-adamantylene, especially a gem-alkylene radical. Also included, however, are unsaturated radicals and radicals which are entirely or partially composed of atoms other than carbon and hydrogen. Examples of such radicals are 2,2-dichloroethylidene, carbonyl, thio and sulfone. For reasons of availability and particular suitability for the purposes of this invention, the preferred radical of formula II is the 2,2-bis(4-phenylene)propane radical, which is derived from bisphenol A and in which Y is 2,2-propylene and $A^2$ and $A^3$ are each p-phenylene.

The cyclic oligomer mixtures consist essentially of oligomers having degrees of polymerization from 2 to 30 and preferably to 20, with a major proportion being up to about 12 and a still larger proportion up to about 15. Since they are mixtures, these compositions have relatively low melting points as compared to single compounds such as the corresponding cyclic trimer. The cyclic oligomer mixtures are generally liquid at temperatures above 300°C and most often at temperatures above 225°C.

The mixtures useful in this invention contain very low proportions of linear oligomers. In general, no more than 10% by weight, and most often no more than about 5%, of such linear oligomers are present. The mixtures may also contain less than about 30%, and preferably no higher than about 20%, of polymers (linear or cyclic) having a degree of polymerization greater than about 30. Such polymers are frequently identified hereinafter as "high polymer". These properties, coupled with the relatively low melting points and viscosities of the cyclic oligomer mixtures, contribute to their utility in the preparation of the composites of this invention.

These mixtures may be prepared by a condensation reaction involving bishaloformates having the formula

$$\text{(III)} \qquad A^1\left(O-\overset{\displaystyle O}{\overset{\|}{C}}-X\right)_2$$

wherein $A^1$ is as defined hereinabove and X is chlorine or bromine. The condensation reaction typically takes place interfacially when a solution of said bishaloformate in a substantially non-polar organic liquid is contacted with a tertiary amine from a specific class and an aqueous alkali metal hydroxide solution.

In one method for preparing the cyclic oligomer mixture, at leat one bishaloformate having formula III is contacted with at least one oleophilic aliphatic or heterocyclic tertiary amine and an aqueous alkali metal hydroxide solution having a concentration of about 0.1—10 M said contact being effected under conditions resulting in high dilution of bishaloformate, or the equivalent thereof, in a substantially non-polar organic liquid which forms a two-phase system with water; and subsequently, the resulting cyclic oligomer mixture is separated from at least a portion of the high polymer and insoluble material present.

While the X values in formula III may be chlorine or bromine, the bischloroformates, in which X is chlorine, are most readily available and their use is therefore preferred. (Frequent reference to bischloroformates will be made hereinafter, but it should be understood that other bishaloformates may be substituted therefore as appropriate.)

The tertiary amines useful in the preparation of the cyclic polycarbonate oligomers generally comprise those which are oleophilic (i.e., which are soluble in and highly active in organic media, especially those used in the oligomer preparation method of this invention), and more particularly those which are useful for the formation of polycarbonates. Reference is made, for example, to the tertiary amines disclosed in US—A—4,217,438 and in US—A—4,368,315.

They include aliphatic amines such as triethylamine, tri-n-propylamine, diethyl-n-propylamine and tri-n-butylamine and highly nucleophilic heterocyclic amines such as 4-dimethylaminopyridine (which, for the purposes of this invention, contains only one active amine group). The preferred amines are those which dissolve preferentially in the organic phase of the reaction system; that is, for which the organic-aqueous partition coefficient is greater than 1. This is true because intimate contact between the amine and the bischloroformate is essential for the formation of the cyclic oligomer mixture. For the most part, such amines contain at least about 6 and preferably about 6—14 carbon atoms.

The most useful amines are trialkylamines containing no branching on the carbon atoms in the 1- and 2-positions. Especially preferred are tri-n-alkylamines in which the alkyl groups contain up to about 4 carbon atoms. Triethylamine is most preferred by reason of its particular availability, low cost, and effectiveness in the preparation of products containing low percentages of linear oligomers and high polymers.

The aqueous alkali metal hydroxide solution is most often lithium, sodium or potassium hydroxide, with sodium hydroxide being preferred because of its availability and relatively low cost. The concentration of said solution is about 0.2—10 M and preferably no higher than about 3 M.

The fourth essential components in the cyclic oligomer preparation method is a substantially non-polar organic liquid which forms a two-phase system with water. The identity of the liquid is not critical, provided it possesses the stated properties. Illustrative liquids are aromatic hydrocarbons such as toluene and xylene; substituted aromatic hydrocarbons such as chlorobenzene, o-dichlorobenzene and nitrobenzene; chlorinated aliphatic hydrocarbons such as chloroform and methylene chloride; and mixtures of the foregoing with ethers such as tetrahydrofuran.

To prepare the cyclic oligomer mixture according to the above-described method, the reagents and components are maintained in contact under conditions wherein the bischloroformate is present in high dilution, or equivalent conditions. Actual high dilution conditions, requiring a large porportion of organic liquid, may be employed but are usually not preferred for cost and convenience reasons. Instead, simulated high dilution conditions known to those skilled in the art may be employed. For example, in one embodiment of the method the bischloroformate or a mixture thereof with the amine is added gradually to a mixture of the other materials. It is within the scope of this embodiment to incorporate the amine in the mixture to which the bischloroformate is added, or to add it gradually, either in admixture with the amine or separately. Continuous or incremental addition of the amine is frequently preferred, whereupon the cyclic oligomer mixture is obtained in relatively pure form and in high yield.

Although addition of the bischloroformate neat (i.e., without solvents) is within the scope of this embodiment, it is frequently inconvenient because many bischloroformates are solids. Therefore, it is preferably added as a solution in a portion of the organic liquid. The proportion of organic liquid used for this purpose is not critical; about 25—75% by weight, and especially about 40—60%, is preferred.

The reaction temperature is generally in the range of about 0—50°C. It is most often about 0—40°C and preferably 20—40°C.

For maximization of the yield and purity of cyclic oligomers as opposed to high polymer and insoluble and/or interactable by-products, it is preferred to use not more than about 0.7 mole of bischloroformate per liter of organic liquid present in the reaction system, including any liquid used to dissolve said bischloroformate. Preferably, about 0.003 to 0.6 mole of bischloroformate is used. It should be noted that this is not a molar concentation in the organic liquid when the bischloroformate is added gradually, since it is consumed as it is added to the reaction system.

The molar proportions of the reagents constitute another important feature for yield and purity maximization. The preferred molar ratio of amine to bischloroformate is about 0.1—1.0:1 and most often about 0.2—0.6:1. The preferred molar ratio of alkai metal hydroxide to bischloroformate is about 1.5—3:1 and most often about 2—3:1.

Step II of the cyclic oligomer preparation method is the separation of the oligomer mixture from at least a portion of the high polymer and insoluble material present. When other reagents are added to the alkali metal hydroxide and the preferred conditions and material proportions are otherwise empoloyed, the cyclic oligomer mixture (obtained as a solution in the organic liquid) typically contains less than 30% by weight and frequently less than about 20% of high polymer and insoluble material. Depending on the intended use of the cyclic oligomer mixture, the separation stpe may then be unnecessary.

Therefore, a highly preferred method for preparing the cyclic oligomer mixture comprises the single step of conducting the reaction using as the amine at least one aliphatic or heterocyclic tertiary amine which, under the reaction conditions, dissolves preferentially in the organic phase of the reaction system, and gradually adding bischloroformate, amine and alkali metal hydroxide simultaneously to a substantially non-polar organic liquid or a mixture of said liquid with water, said liquid or mixture being maintained at a temperature in the range of about 0—50°C; the amount of bischloroformate used being up to about 0.7 mole for each liter of said organic liquid present in the reaction system, and the molar proportions of amine and alkali metal hydroxide to bischloroformate being 0.2—1.0:1 and 2—3:1, respectively; and recovering the cyclic oligomers thus formed.

As in the embodiment previously described, another portion of said liquid may serve as a solvent for the bischloroformate. Addition of each reagent is preferably continuous, but may be incremental for any or all of said reagents.

When a separation step is necessary, the unwanted impurities may be removed in the necessary amounts by conventional operations such as combining the solution with a non-solvent for said impurities. Illustrative non-solvents include ketones such as acetone and methyl isobutyl ketone and esters such as methyl acetate and ethyl acetate. Acetone is a particularly preferred non-solvent. Recovery of the cyclic oligomers normally means merely separating the same from diluent (by known methods such as vacuum evaporation) and, optionally, from high polymer and other impurities.

The preparation of cyclic oligomer mixtures useful in this invention is illustrated by the following examples. All parts and percentages in the examples herein are by weight unless otherwise indicated. Temperatures are in degrees Celcius. Molecular weights, whenever referred to herein, are weight average unless otherwise indicated and were determined by gel permeation chromatogrpahy relative to polystyrene.

Examples 1—18

Bisphenol A bischloroformate was reacted with aqueous sodium hydroxide and triethylamine in an organic liquid (chloroform in Example 7, methylene chloride in all other examples) according to the following procedure: The bischloroformate was dissolved in half the amount of organic liquid employed and was added gradually, with slow stirring to the balance of the reaction mixture. In Examples 1—10 and 12, the triethylamine was all originally present in the reaction vessel; in Examples 14—16, it was added gradually at the same time as the bischloroformates; and in Examples 11, 13, 17 and 18, it was added incrementally at the beginning of bischloroformate addition and at intervals of 20% during said addition. The amount of sodium hydroxide used was 2.4 moles per mole of bischloroformate. After all the bischloroformate had been added, the mixture was stirred for about 2 minutes and the reaction was quenched by the addition of a slight excess of 1 *M* aqueous hydrochloric acid. The solution in the organic liquid was washed twice with dilute aqueous hydrochloric acid, dried by filtration through phase separation paper and evaporated under vacuum. The residue was dissolved in tetrahydrofuran and high polymers were precipitated by addition of acetone.

The reaction conditions for Examples 1—18 are listed in Table I together with the approximately percentage (by weight) of cyclic polycarbonate oligomer present in the product before high polymer precipitation. The weight average molecular weights of the cyclic oligomer mixtures were approximately 1300, corresponding to an average degree of polymerization of about 5.1.

TABLE 1

| Example | Bischloroformate amt., mmole/l. org. liquid | Bischloroformate amt., total mmol. | NaOH molarity | Molar ratio amine: bis-chloroformate | temperature | Addition tme, min. | % oligomer in product |
|---|---|---|---|---|---|---|---|
| 1 | 100 | 2 | 0.313 | 0.5 | 20 | 30 | 97 |
| 2 | 100 | 2 | 0.625 | 0.5 | 20 | 30 | 95 |
| 3 | 100 | 2 | 2.5 | 0.5 | 35 | 55 | 93 |
| 4 | 100 | 2 | 2.5 | 0.5 | 0 | 30 | 77 |
| 5 | 100 | 2 | 2.5 | 0.5 | 20 | 30 | 87 |
| 6 | 100 | 2 | 2.5 | 0.5 | 35 | 30 | 78 |
| 7 | 100 | 2 | 2.5 | 0.5 | 50 | 30 | 88 |
| 8 | 100 | 2 | 2.5 | 0.25 | 20 | 30 | 74 |
| 9 | 100 | 1 | 2.5 | 0.2 | 20 | 15 | 75 |
| 10 | 200 | 4 | 2.5 | 0.5 | 20 | 30 | 88 |
| 11 | 500 | 10 | 2.5 | 0.25 | 25 | 105 | 83 |
| 12 | 500 | 10 | 2.5 | 0.25 | 25 | 105 | 78 |
| 13 | 500 | 10 | 2.5 | 0.25 | 25 | 105 | 83 |
| 14 | 500 | 10 | 2.5 | 0.25 | 25 | 105 | 87 |
| 15 | 500 | 10 | 2.5 | 0.29 | 30 | 90 | 78 |
| 16 | 500 | 10 | 2.5 | 0.25 | 30 | 20 | 75 |
| 17 | 500 | 10 | 2.5 | 0.25 | 40—45 | 105 | 79 |
| 18 | 500 | 10 | 2.5 | 0.4 | 25 | 105 | 79 |

Example 19

Bisphenol A bischloroformate (2.0 mmol.) was reacted with aqueous sodium hydroxide and 4-dimethylaminopyridine in methylene chloride. The procedure employed was that of Example 1, except that 66.67 mmol. of bisphenol A per liter of methylene chloride was employed, the aqueous sodium hydroxide concentration was 5.0 *M* and the reaction temperature was about 25°C. The product comprised 85% cyclic oligomer.

Polymerization of the cyclic oligomer mixture is typically effected by contacting the same with a minor effective amount of a polycarbonate formation catalyst. The catalyst should ordinarily be incorporated in the prepreg composition of this invention, as by dissolving the same in the cyclic oligomer mixture prior to contact with the filler.

The polycarbonate formation catalysts which can be used according to this invention include various bases and Lewis acids. It is known that basic catalysts may be used to prepare polycarbonates by the interfacial method, as well as by transesterification and from cyclic oligomers. Reference is made to the aforementioned Patent US—A—4,217,438 as well as US—A—3,155,683, 3,274,214 and 4,368,315. Such catalysts may also be used to polymerize the cyclic oligomer mixtures. Examples thereof are lithium 2,2,2-trifluoroethoxide, n-butyllithium and tetramethylammonium hydroxide. Also useful are various weakly basic salts such as sodium benzoate and lithium stearate.

Lewis acids useful as polycarbonate formation catalysts include dioctyltin oxide, triethanolamine-titanium isopropoxide, tetra(2-ethylhexyl) titanate and polyvalent metal (especially titanium and aluminum) chelates such as bisisopropoxytitanium bisacetylacetate (commercially available under the trade name "Tyzor AA®") and the bisisopropooxyaluminum salt of ethyl acetoacetate. Among the preferred catalysts are lithium stearate and bisisopropoxytitanium bisacetylacetonate.

The prepreg compositions of this invention may contain up to 70% filler by volume when a woven filler is used, and up to about 40% in the case of non-woven fillers. In general, the amount of polycarbonate formation catalyst used is about 0.001—1.0 mole percent based on oligomer mixture.

Polymerization of the catalyst-containing prepreg compositions of this invention may be effected by heating them at a temperature up to 350°C, preferably about 200—300°C. Certain methods of prepreg preparation, more fully described hereinafter, may involve melting the oligomer mixture by heating it to temperatures above 225°C, whereupon polymerization may be initiated. However, the polymerization rate is initially slow enough to be negligble for the time period required to impregnate the filler and fill the mold. Thus, the presence in the prepreg composition of a minor amount of polymerization product of the cyclic oligomer mixture (i.e., linear polycrbonate) is contemplated as part of the invention.

Various options for prepreg formation will be apparent to those skilled in the art. For example, the filler and the solid oligomer mixture may be combined in the cold mold, but this is not always convenient since the oligomer mixture are powdery solids at room temperature. Alternatively, the oligomer mixture may be liquefied in a chamber external to the mold and passed in liquid form into the hot mold. It may first meet the filler in said chamber or in the mold itself, the latter option resulting ink a resin transfer molding process.

Polymerization of the prepreg in the mold is typically conducted at the above-described polymerization, temperatures and at conventional pressures. Because of the relatively low viscosity of the cyclic oligomer mixture at these temperatures, it may be preferable to employ a matched die type of mold. It is generally advisable to coat the mold surfaces with a suitable mold release agent, typically a silicone material, before charging it with the oligomer mixture.

Upon polymerization and molding as described herein, fiber-reinforced polycarbonate articles are obtained which have excellent thermal stability, solvent resistance and other properties.

The invention is illustrated by the following example.

Example 20

The filler used was a commercially available graphite fabric containing 3000-filament count continuous AS4 fiber in a balanced 8-harness, satin-weave construction. Rectangular swaths of the fabric, 1.27 × 12.7 cm, were cut with the warp and weft directions coinciding with the swath edges. The swaths were placed, five in a stack, in a heat-resistant glass cylinder and nitrogen was passed through for 45 minutes. The temperature of the cylinder was then raised to 450°C to remove the sizing from the graphite fibers. At about 400°C, thick black smoke was noted. After 60 minutes at 450°C, the tube was removed from the furnace and allowed to cool while nitrogen passage was continued. When the temperature of the tube reached 25°C, the fabric swaths were removed and stored in a vacuum desiccator.

A 10-gram sample of cyclic bisphenol A carbonate oligomer similar to those described in Examples 1—18 was dissolved in 100 ml of methylene chloride and 160 microlisters of a 0.1 *M* solution of the bisisopropoxyaluminum salt of ethyl acetoacetate in toluene was added. The mixture was stirred and the solvent was stripped in a rotary evaporator, after which the oligomer-catalyst mixture was dried under nitrogen at 110°C.

A positive-pressure mold whose cavity size matched the dimensions of the graphite fabric swaths was sprayed with a commercially available silicone mold release agent. The mold was maintained at room temperature as a stack of five swaths of graphite fabric was placed therein, with oligomer powder being sprinkled uniformly between every two swaths to produce a 9-layer sandwich at a filler loading of 55% by

volume. The mold was closed and transferred to a 445 kN press whose platens were heated at 270°C. The mold was heated at 10°C per minute to 250°C under virtually no pressure. Above 200°C, the mold charge began to compact due to initial melting of the oligomer mixture, thus forming the prepreg composition. When the mold temperature had reached 250°C, 13.8 MPa of pressure was applied for 15 minutes, whereupon the mold temperature increased to 265°C.

The mold was transferred to a similar press whose platens were water-cooled at about 20°C, with the pressure initially set at 13.8 MPa. When the mold had cooled to 50°C, it was opened and the molded article removed. It was jet black with a smooth, shiny, resin-rich surface, through which the details of the carbon fiber fabric were seen. Upon removal of a piece of the edge, an interior surface was revealed which contained no poorly impregnated fibers. When the article was dropped on a flat, hard surface, it produced a high pitch ring, generally associated with well impregnated carbon fiber composites.

A fragment of the article was removed and the resin was extracted with chloroform. Upon filtration of the chloroform extract and reprecipitation using methanol, the solid polycarbonate was obtained. After drying, its weight average molecular weight was found by gel permeation chromatography to be 57,570 (relative to polystyrene).

The article was subjected to 3-point bend testing according to ASTM method D790. It was found to have a Young's modulus of 69.7 GPa, an ultimate strength of 772 MPa and a strain to failure of 1.11%.

Similar composite articles were prepared using type E glass fibers and highly oriented polyamide fibers sold under the trade name "Kevlar 49®".

## Claims

1. A moldable polycarbonate formation catalyst-containing prepreg composition comprising a filler consisting essentially of continuous fibers and a polymerizable composition comprising a mixture of cyclic oligomers having the formula

(I)

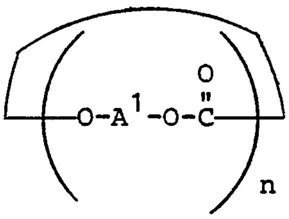

wherein $A^1$ is a divalent aromatic radical and n is from 2 to 30.

2. A composition according to claim 1 wherein the filler comprises carbon, glass, highly oriented polyamide or boron fibers.

3. A composition according to claim 2 wherein the oligomer mixture consists essentially of cyclic oligomers having degrees of polymerization up to 20 and contains no more than 10% by weight of linear oligomers.

4. A composition according to claim 3 wherein $A^1$ has the formula

(II) $$—A^2—Y—A^3— ,$$

wherein each of $A^2$ and $A^3$ is a single-ring divalent aromtic radica and Y is a bridging radical in which one or two atoms separate $A^2$ from $A^3$.

5. A composition according to claim 4 wherein the filler is woven and comprises up to 70% by volume thereof.

6. A composition according to claim 5 wherein each of $A^2$ and $A^3$ is p-phenylene and Y is 2,2-propylene.

7. A composition according to claim 6 wherein a major proportion of the oligomers have degrees of polymerization up to 12.

8. A composition according to claim 7 wherein the filler consists essentially of graphite fibers.

9. A composition according to claim 7 wherein the filler consists essentially of glass fibers.

10. A composition according to claim 7 wherein the filler consists essentially of highly oriented polyamide fibers.

11. A composition according to claim 1 wherein the polycarbonate formation catalyst is a base or a Lewis acid.

12. A composition according to claim 11 wherein the polycarbonate formation catalyst is lithium stearate or bisisopropoxytitanium bisacetylacetonate.

## Patentansprüche

1. Ausformbare Polycarbonatbildungskatalysator enthaltende Prepregzusammensetzung, enthaltend einen Füllstoff, bestehend im wewsentlichen aus kontinuierlichen Fasern und eine polymerisierbare

Zusammensetzung aus einer Mischung aus zyklischen Oligomeren mit der Formel

(I) 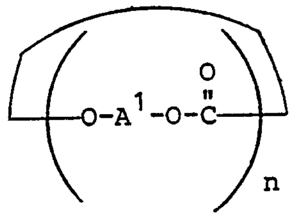

worin $A^1$ ein zweiwertiger aromatischer Rest und n 2 bis 30 ist.

2. Zusammensetzung nach Anspruch 1, worin der Füllstoff Kohlenstoff, Glas, hochorientierte Polyamid- oder Borfasern umfaßt.

3. Zusammensetzung nach Anspruch 2, worin die Oligomermischung im wesentlichen aus zyklischen Oligomeren mit Polymerisationsgraden bis zu 20 besteht und nicht mehr als 10 Gewichtsprozent lineare Oligomere enthält.

4. Zusammensetzung nach Anspruch 3, worin $A^1$ die Formel

(II) $$—A^2—Y—A^3—$$

aufweist, worin jedes $A^2$ und $A^3$ ein zweiwertiger aromatischer Einringrest ist und Y ein Brückenrest ist, in welchem $A^2$ von $A^3$ durch ein oder zwei Atome getrennt ist.

5. Zusammensetzung nach Anspruch 4, worin der Füllstoff gewebt ist und bis zu 70 Vol.-% derselben umfaßt.

6. Zusammensetzung nach Anspruch 5, worin jedes $A^2$ und $A^3$ p-Phenylen ist und Y 2,2-Propylen ist.

7. Zusammensetzung nach Anspruch 6, worin ein größerer Anteil der Oligomeren Polymerisationsgrade zu 12 aufweist.

8. Zusammensetzung nach Anspruch 7, worin der Füllstoff im wesentlichen aus Graphitfasern besteht.

9. Zusammensetzung nach Anspruch 7, worin der Füllstoff im wesentlichen aus Glasfasern besteht.

10. Zusammensetzung nach Anspruch 7, worin der Füllstoff im wesentlichen aus hochorientierten Polyamidfasern besteht.

11. Zusammensetzung nach Anspruch 1, worin der Polycarbonatbildungskatalysator eine Base oder eine Lewis-Säure ist.

12. Zusammensetzung nach Anspruch 11, worin der Polycarbonatbildungskatalysator Lithiumstearate oder Bisisopropoxytitanium Bisisopropoxytitanium Bisacetylacetat ist.

**Revendications**

1. Composition moulable pour préimprégnés contenant un catalyseur de formation de polycarbonate comprenant une charge, constituée essentiellement de fibres continues, et une composition polymérisable comprenant un mélange d'oligomères cycliques ayant pour formule

(I) 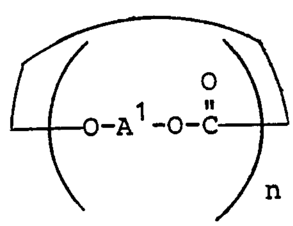

dans laquelle $A^1$ est un radical aromatique divalent et n a une valeur de 2 à 30.

2. Composition selon la revendication 1, dans laquelle la charge comprend des fibres de carbone, de verre, de polyamide fortement orienté ou de bore.

3. Composition selon la revendication 2, dans laquelle le mélange d'oligomères est constitué essentiellement d'oligomères cycliques ayant un degré de polymérisation d'au plus 20 et ne contenant pas plus de 10% en poids d'oligomères linéaires.

4. Composition selon la revendication 3, dans laquelle $A^1$ a pour formule

(II) $$—A^2—Y—A^3—$$

dans laquelle chacun de $A^2$ et $A^3$ est un radical aromatique divalent monocyclique et Y est un radical de pontage dans lequel un ou deux atomes séparent $A^2$ de $A^3$.

5. Composition selon la revendication 4, dans laquelle la charge est tissée et constitue jusqu'à 70% de son volume.

6. Composition selon la revendication 5, dans laquelle chacun de $A^2$ et $A^3$ est un p-phénylène et Y est un 2,2-propylène.

7. Composition selon la revendication 6, dans laquelle une proportion majeure des oligomères a un degré de polymérisation d'au plus 12.

8. Composition selon la revendication 7, dans laquelle la charge est constituée essentiellement de fibres de graphite.

9. Composition selon la revendication 7, dans laquelle la charge est constituée essentiellement de fibres de verre.

10. Composition selon la revendication 7, dans laquelle la charge est constituée essentiellement de fibres de polyamide fortement orienté.

11. Composition selon la revendication 1, dans laquelle le catalyseur de formation d'un polycarbonate est une base ou un acide de Lewis.

12. Composition selon la revendication 11, dans laquelle le catalyseur de formation d'un polycarbonate est le stéarate de lithium ou le bisacétylacétonate de bisisopropoxytitane.